# EUROPÄISCHE PATENTANMELDUNG

(11) **EP 0 943 536 A2**
(43) Veröffentlichungstag der Anmeldung: **22.09.1999**
(21) Anmeldenummer: 99105514.6
(22) Anmeldetag: 17.03.1999
(51) Int. Cl.: B62M 1/04, B62M 9/08, B62M 1/10

(54) **Zugfahrwerk für Fahrrad**

(30) Priorität: 17.03.1998 DE 19811491
(71) Anmelder: Wang, Zhaoqi, 21079 Hamburg (DE)
(72) Erfinder: Wang, Zhaoqi, 21079 Hamburg (DE)
(74) Vertreter: Heun, Thomas

(57) **Zusammenfassung**

Es wird ein Zugfahrwerk für ein Fahrrad mit mindestens einer schwenkbaren Kurbel (1) und einem Übergangsadapter (3) zum Übertragen einer Kurbel-Schwenkbewegung mittels eines Radzuges (6) auf ein Antriebsrad beschrieben, das sich insbesondere dadurch auszeichnet, daß der Übergangsadapter (3) Federelemente (16) aufweist, die von dem Radzug beaufschlagt sind und durch Zusammendrücken oder Ausdehnen ein auf das Antriebsrad übertragbares Drehmoment verändern.

## Beschreibung

Die Erfindung betrifft ein Zugfahrwerk für ein Fahrrad mit mindestens einer Kurbel, einem Kurbelzug und einem Übergangsadapter zum Übertragen der Tretbewegung auf ein Antriebsrad.

Die Bauweise der heute am meisten verwendeten Fahrräder hat sich im Hinblick auf das Fahrwerk und den Antrieb seit vielen Jahren kaum verändert. Zur Kraftübertragung dienen nach wie vor eine Tretkurbel mit Zahnkranz, deren Drehung über eine Kette und ein Zahnrad auf das Hinterrad übertragen wird. Es sind bereits zahlreiche Versuche unternommen worden, die Kraftübertragung auf anderem Wege zu realisieren, indem zum Beispiel anstelle der Kette eine Welle oder Keilriemen verwendet werden. Abgesehen davon, daß diese Konstruktionen relativ aufwendig, schwer oder fehleranfällig sind, ist der Wirkungsgrad dieser Fahrwerke relativ gering. Weiterhin sind z.B. aus der DE-PS 426146 Zugfahrwerke bekannt, bei denen die Kraft mit zwei Kurbeln, einem Kurbelzug und einem Übergangsadapter auf das Hinterrad übertragen wird.

Der Erfindung liegt die Aufgabe zugrunde, ein solches Zugfahrwerk benutzerfreundlicher und zuverlässiger zu machen.

Gelöst wird diese Aufgabe mit einem Zugfahrwerk der eingangs genannten Art, das die Merkmale gemäß Anspruch 1 aufweist.

Die Unteransprüche haben vorteilhafte Weiterbildungen der Erfindung zum Inhalt.

Weitere Einzelheiten, Merkmale und Vorteile der Erfindung ergeben sich aus der folgenden Beschreibung von bevorzugten Ausführungsformen anhand der Zeichnung, in denen gleiche Teile jeweils mit gleichen Bezugsziffern bezeichnet sind. Es zeigt:
Fig. 1 einen Drehmomentverlauf eines bekannten Tret-Antriebssystems;
Fig. 2a, b ein Fahrrad mit einem Zugfahrwerk gemäß einer ersten Ausführungsform;
Fig. 3 ein Fahrrad mit einem Zugfahrwerk gemäß einer zweiten Ausführungsform;
Fig. 4a, b ein Fahrrad mit einem Zugfahrwerk gemäß einer dritten Ausführungsform;
Fig. 5a, b eine Darstellung der Funktionsweise eines erfindungsgemäßen Zugfahrwerks;
Fig. 6 die wirksamen Weglängen bei einem bekannten und einem erfindungsgemäßen Fahrwerk;
Fig. 7 einen Drehmomentverlauf eines erfindungsgemäßen Tret-Zugfahrwerks;
Fig. 8a, b, c eine erste Ausführungsform eines Übergangsadapters;
Fig. 9a, b, c verschiedene Einzelteile des Übergangsadapters;
Fig. 10a, b, c, d weitere Einzelteile des Übergangsadapters;
Fig. 11a, b, c verschiedene Ansichten eines Sperrades;
Fig. 12a, b eine erste Schaltstellung des Übergangsadapters;
Fig. 13a, b eine zweite Schaltstellung des Übergangsadapters;
Fig. 14a, b eine erste Schaltstellung einer zweiten Ausführungsform eines Übergangsadapters;
Fig. 15a, b eine zweite Schaltstellung der zweiten Ausführungsform des Übergangsadapters;
Fig. 16a, b, c verschiedene Ansichten einer dritten Ausführungsform eines Übergangsadapters;
Fig. 17a, b, c verschiedene Ansichten eines Details aus Fig. 16a in einer ersten Schaltstellung;
Fig. 18a, b, c verschiedene Ansichten des Details aus Fig. 16a in einer zweiten Schaltstellung und
Fig. 19a, b, c verschiedene Ansichten einer vierten Ausführungsform eines Übergangsadapters in einer ersten Schaltstellung.

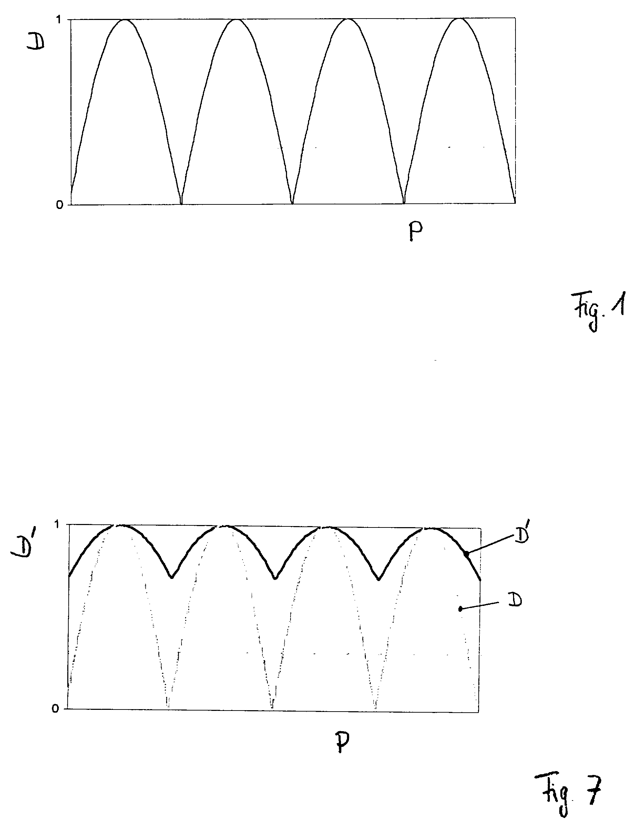

Bekannte Fahrwerke haben einen relativ niedrigen Wirkungsgrad der Kraftumsetzung. Das Pedal eines bekannten Fahrrades wird kreisförmig bewegt, so daß das Drehmoment D gemäß Figur 1 etwa sinusförmig gegenüber der Pedalperiode P verläuft. Die wirksame Kraftübertragung erfolgt somit nur auf etwa zwei Dritteln des kreisförmigen Weges. Dies ist insbesondere bei langsamen Bergfahrten sehr unangenehm, da die Pedale jeweils über Totstellen bewegt werden müssen. Dabei besteht die Gefahr, daß in diesem Moment die Geschwindigkeit zu langsam wird und der Fahrer zumindest einen Fuß absetzen und die Fahrt unterbrechen muß.

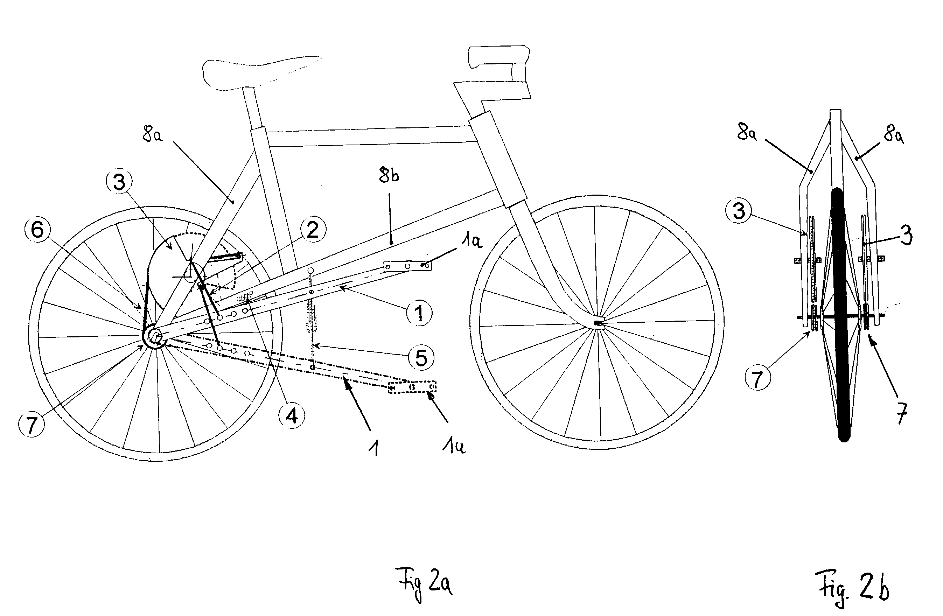

Figur 2a zeigt ein Fahrrad mit einer ersten Ausführungsform des Zugfahrwerks von der Seite, während Figur 2b eine Darstellung von hinten zeigt.

Das Zugfahrwerk umfaßt auf jeder Seite des Fahrrades jeweils eine Kurbel 1 mit jeweils einem Pedal 1a. Die Kurbeln sind an einer Achse des Hinterrades schwenkbar gelagert und können völlig unabhängig voneinander getreten werden. Zur Begrenzung der Tretbewegung nach unten (gestrichelt angedeutet) ist jeweils ein Begrenzerseil 5 vorgesehen, das einerseits an der Kurbel 1, andererseits an einem Rahmenteil 8b befestigt ist. Zur Begrenzung der Schwenkbewegung der Kurbel 1 nach oben ist an dem Rahmenteil 8b ein Kurbelbegrenzer 4 in Form eines Anschlages vorgesehen. Die Bewegung der Kurbeln wird mit jeweils einem dadurch geschwenkten Übergangsadapter 3 auf das Hinterrad übertragen. Dieser Übergangsadapter 3 ist an einem weiteren Rahmenteil 8a drehbar befestigt.

Die Kraftübertragung von der Kurbel 1 auf den Übergangsadapter 3 erfolgt mit einem Kurbelzug 2, wobei an der Kurbel 1 verschiedene Befestigungspunkte für den Kurbelzug vorgesehen sind, um eine Anpassung des wirksamen Hebelarms an die individuelle Leistungsfähigkeit des Fahrers zu ermöglichen. Das Hinterrad wird mit jeweils einem Sperrad 7 angetrieben, das von einem an dem Übergangsadapter 3 befestigten Radzug 6 beaufschlagt wird. Diese Teile sind gemäß Figur 2b auf beiden Seiten des Fahrrades vorhanden.

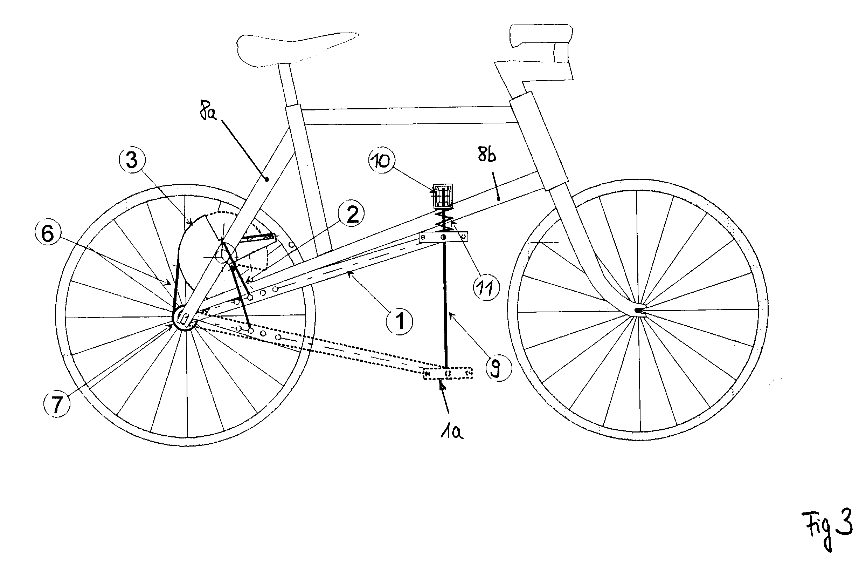

Figur 3 zeigt ein Fahrrad mit einer zweiten Ausführungsform des Zugfahrwerks. Im Unterschied zur ersten Ausführungsform sind die beiden Kurbeln 1 hier zumindest teilweise aneinander gekoppelt. Zu diesem Zweck ist ein Verbindungsseil 9 vorgesehen, das über eine Rolle 10 geführt und an seinen beiden Enden mit jeweils einem Pedal la bzw. einer Kurbel 1 verbunden ist. Die Rolle 10 ist an einem Rahmenteil 8b befestigt. Die Dämpfungsfeder 11 dient zur Dämpfung des Anschlags der Kurbel 1. Die übrigen Merkmale entsprechen denen der in den Figuren 2a, b gezeigten ersten Ausführungsform.

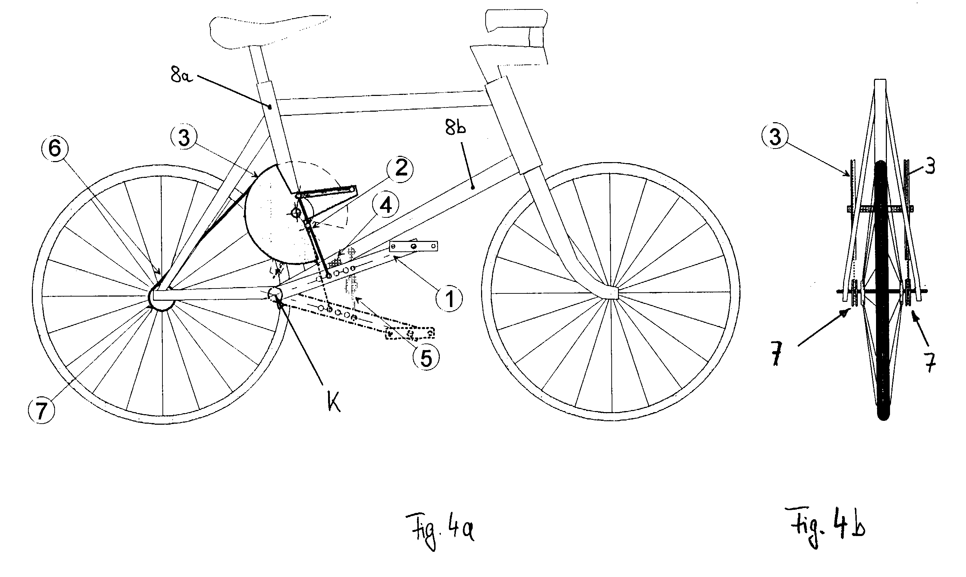

Die Figuren 4a, b zeigen ein Fahrrad mit einer dritten Ausführungsform des Zugfahrwerk von der Seite (a) bzw. von hinten (b). Im Unterschied zur ersten Ausführungsform sind hierbei die Kurbeln 1 wesentlich kürzer und mit ihrem Anlenkungspunkt K an einem Rahmenteil 8b nach vorne verschoben. Die Bewegung der Kurbeln 1 nach unten wird wiederum durch ein Begrenzerseil 5 begrenzt, das an dem Rahmenteil 8b sowie an einem von mehreren möglichen Befestigungspunkten an der Kurbel befestigt ist. Zur Kraftübertragung dient wiederum der Übergangsadapter 3, der an einem weiteren Rahmenteil 8a drehbar befestigt ist. Auch hierbei ist ein Kurbelzug 2 zwischen der Kurbel 1 und dem Übergangsadapter 3 sowie ein Radzug 6 zwischen dem Adapter 3 und dem Sperrad 7 vorgesehen. Das Sperrad 7 treibt das Hinterrad an.

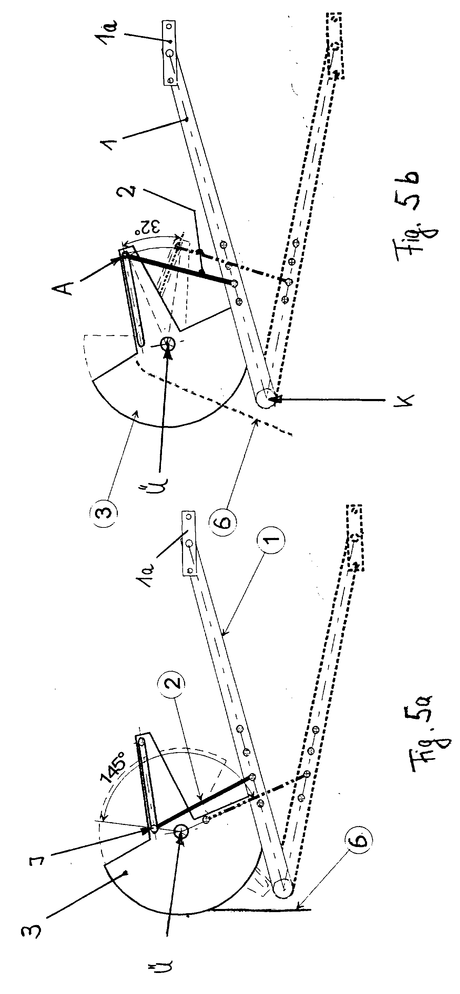

Die Figuren 5a, b zeigen die prinzipielle Funktionsweise des Zugfahrwerks. Die Kurbeln 1, die jeweils um den Punkt K schwenkbar gelagert sind, sind jeweils in einer oberen und einer unteren Stellung gezeigt. In Figur 5a befindet sich der Befestigungspunkt des Kurbelzuges 2 an dem Übergangsadapter 3 in einer ersten, inneren Stellungen I in der Nähe des Lagerpunktes Ü (Drehpunkt), während er sich gemäß Figur 5b in einer zweiten äußeren Stellung A befindet. Zwischen diesen beiden Stellungen sind auch beliebige Zwischenstellungen möglich, die später noch erläutert werden. Entsprechend der gewählten Stellung ergibt sich im Falle der Figur 5a im Hinblick auf die Kraftübertragung auf den Radzug 6 ein minimales Drehmoment und ein maximaler Drehwinkel (Schwenkwinkel) an dem bzw. des Übergangsadapters 3 (hier etwa 145°), was insbesondere bei hoher Geschwindigkeit sinnvoll ist, während mit der Stellung gemäß Figur 5b ein maximales Drehmoment bei minimalem Drehwinkel (hier etwa 32°) erreicht wird, was insbesondere für geringe Geschwindigkeit (zum Beispiel Bergfahrt) geeignet ist. Die unterschiedlichen Verläufe des Radzuges 6 innerhalb des Übergangsadapters 3 werden später noch erläutert.

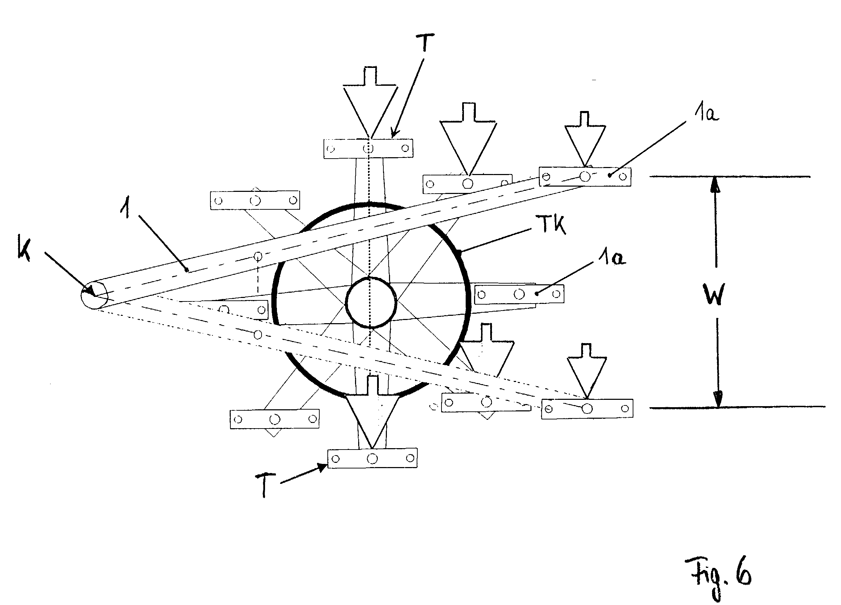

Figur 6 zeigt einen Vergleich der wirksamen Weglängen der Pedale 1a bei einer bekannten Tretkurbel TK bzw. einer erfindungsgemäßen Kurbel 1, die in einem Drehpunkt K gelagert ist. Während bei der erfindungsgemäßen Kurbel über die gesamte Weglänge W Kraft umgesetzt wird, ist bei der Keisbewegung der bekannten Tretkurbel TK zunächst jeweils der obere und untere Totpunkt T zu überwinden, bevor wirksam Kraft ausgeübt werden kann.

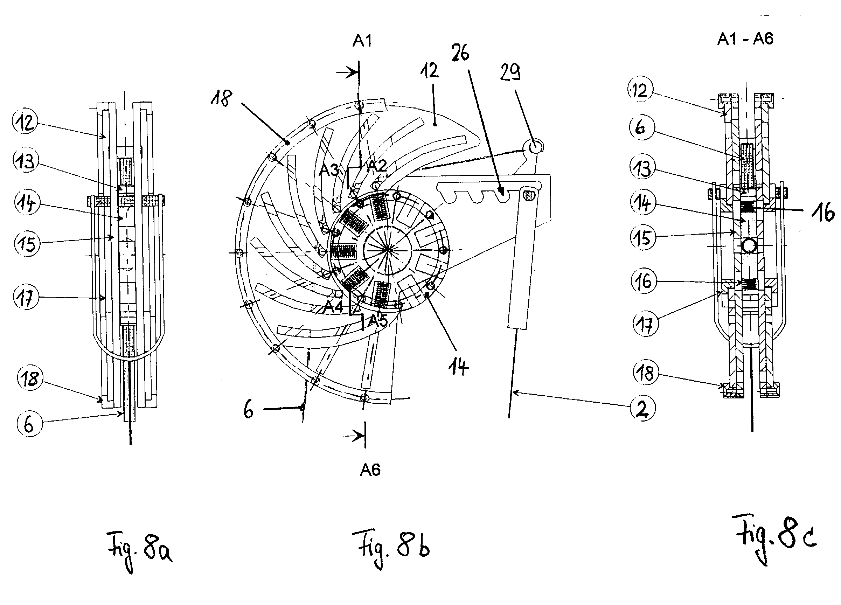

Dies wird auch aus dem in Figur 7 dargestellten Verlauf des Drehmomentes D' über der Pedalperiode P deutlich. Der Drehmomentverlauf fällt wesentlich weniger stark ab, als dies bei der bekannten Tretkurbel (siehe Kurve D und Figur 1) der Fall ist.

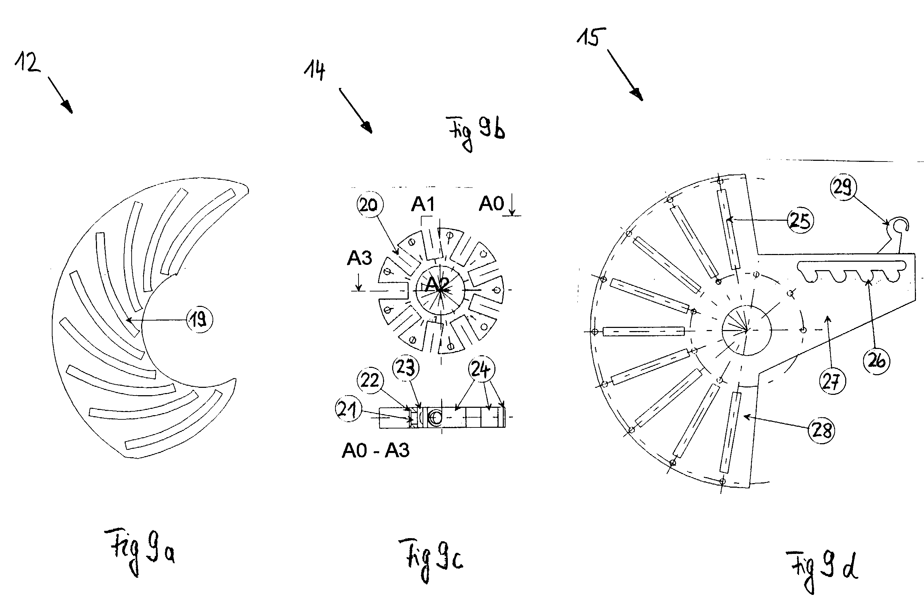

Die Figuren 8a, b, c zeigen eine erste Ausführungsform des Übergangsadapters 3. Ein solcher Adapter besteht im wesentlichen aus einer Synchronplatte 12, einer Zugwalze 13, einer Unterlage 14, einer Seitenplatte 15, einer Innenführungsschiene 17 und einer Außenführungsschiene 18. Der zu dem Sperrad 7 führende Radzug 6 ist an einer Radzughalterung 29 befestigt. Der Kurbelzug 2 greift an der Seitenplatte 15 an und liegt in einem von mehreren Schalteinschnitten 26. Ferner sind in der Schnittdarstellung A1-A6 gemäß Figur 8c zwei Druckfedern 16 für die Zugwalzen 13 gezeigt.

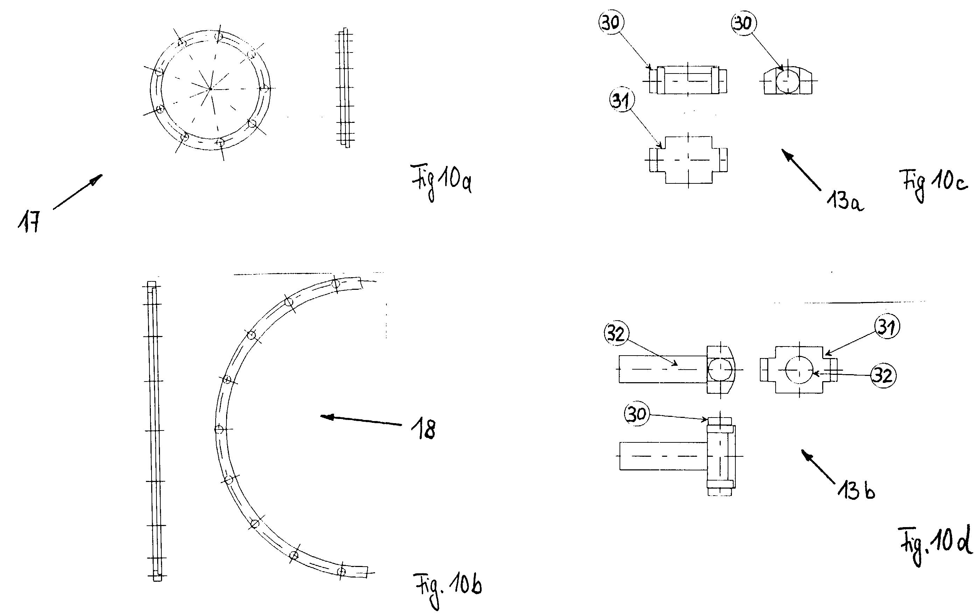

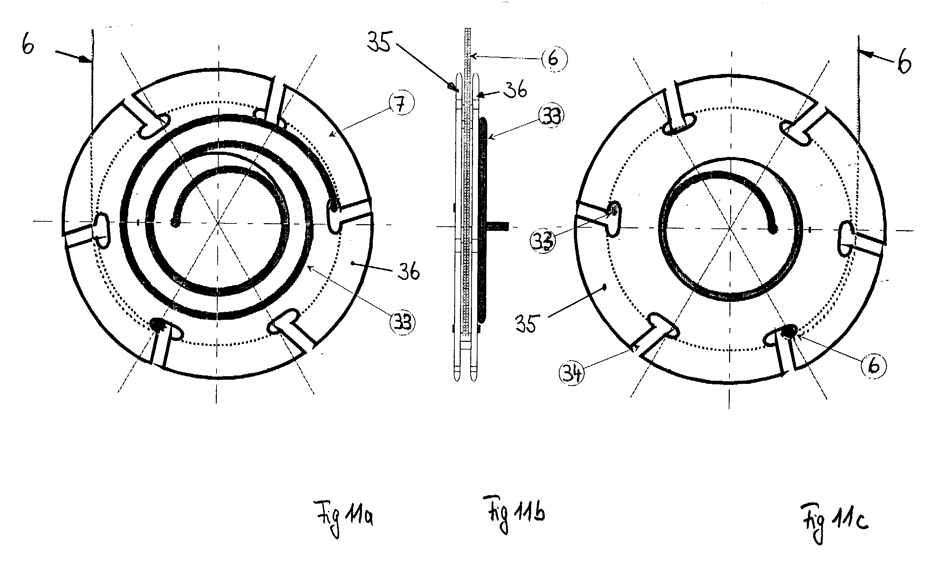

Diese Teile sind im einzelnen in den Figuren 9 und 10 dargestellt.

Figur 9a zeigt die Synchronplatte 12, die eine Mehrzahl von Synchroneinschnitten 19 aufweist, die mit einem Winkel von etwa 45 Grad zur Radialrichtung verlaufen. Figur 9b zeigt eine Draufsicht auf die Unterlage 14, die eine Mehrzahl von radial gerichteten Federeinschnitten 20 aufweist. Ein Schnitt entlang der Linie A0-A3 ist in Figur 9c gezeigt. In dieser Darstellung ist ein Loch 21 für einen Druckfeder-Zylinder der Walze und ein Senker 22 für eine Druckfeder zu erkennen, wobei der Innenumfang mit der Bezugsziffer 23 und der Außenumfang mit der Bezugsziffer 24 bezeichnet ist.

Figur 9d zeigt die Seitenplatte 15, die eine Mehrzahl vom radial verlaufenden Walzeneinschnitten 25 aufweist. Diese befinden sich in einer Sektorseite 28, die einer Armseite 27 gegenüberliegt, in der sich die Schalteinschnitte 26 für den Kurbelzug 2 sowie die Radzughalterung 29 für den Radzug 6 befinden.

Figur 10a zeigt eine Draufsicht und eine Seitenansicht der Innenführungsschiene 17. In Figur 10b ist eine Seitenansicht und eine Draufsicht auf die Außenführungsschiene 18 dargestellt. Figur 10c zeigt in verschiedenen Ansichten (geklappt) eine Zugwalze 13a, die zum Einsatz ohne Druckfeder 16 vorgesehen ist und einen Seitenzylinder 30 sowie einen Seitenschnitt 31 aufweist. Figur 10d zeigt verschiedene Ansichten (geklappt) einer Zugwalze 13b zur Verwendung mit Druckfeder 16, die über einen Federzylinder 32 gesetzt wird. Auch diese Zugwalze 13b weist einen Seitenschnitt 31 sowie einen Seitenzylinder 30 auf.

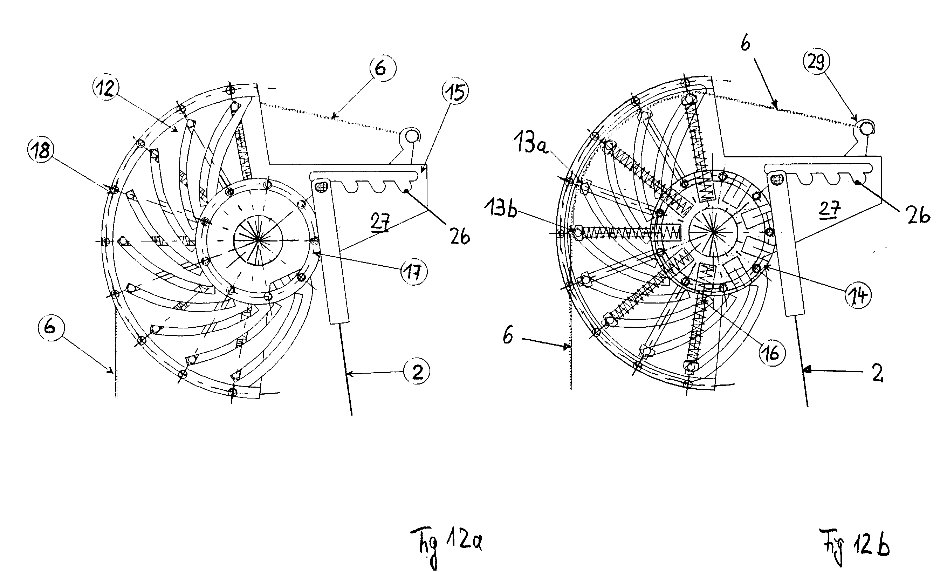

Als weiteres Teil des erfindungsgemäßen Zugfahrwerks ist schließlich in den Figuren 11a, b, c in verschiedenen Ansichten (geklappt) einen Sperrad 7 gezeigt. Das Sperrad 7 dient zum Aufrollen des Radzuges 6 während der nach oben gerichteten Bewegung der Kurbel 1. Zu diesem Zweck ist eine Spiralfeder 33 vorgesehen, die einerseits an einem festen Punkt des Fahrrades, andererseits an einem Einschnitt 34 einer Spiralfederkoppelseite 36 angreift. Der Radzug 6 greift an einem anderen Einschnitt 34 einer Radzugkoppelseite 35 an. Jedem Übergangsadapter ist ein solches Sperrad 7 zugeordnet, so daß beide unabhängig voneinander arbeiten und die Kurbeln 1 sowohl gleichzeitig als auch alternierend gedrückt werden können.

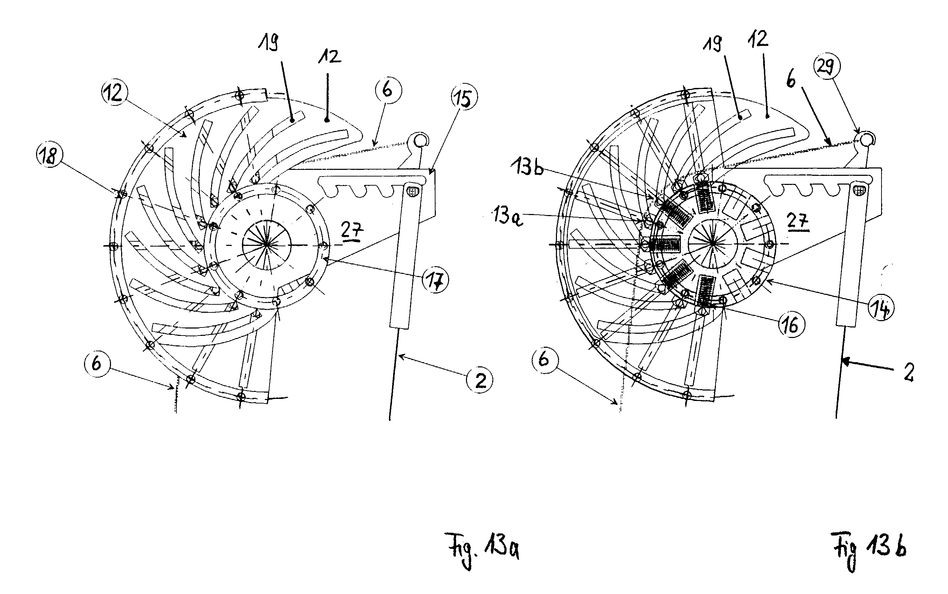

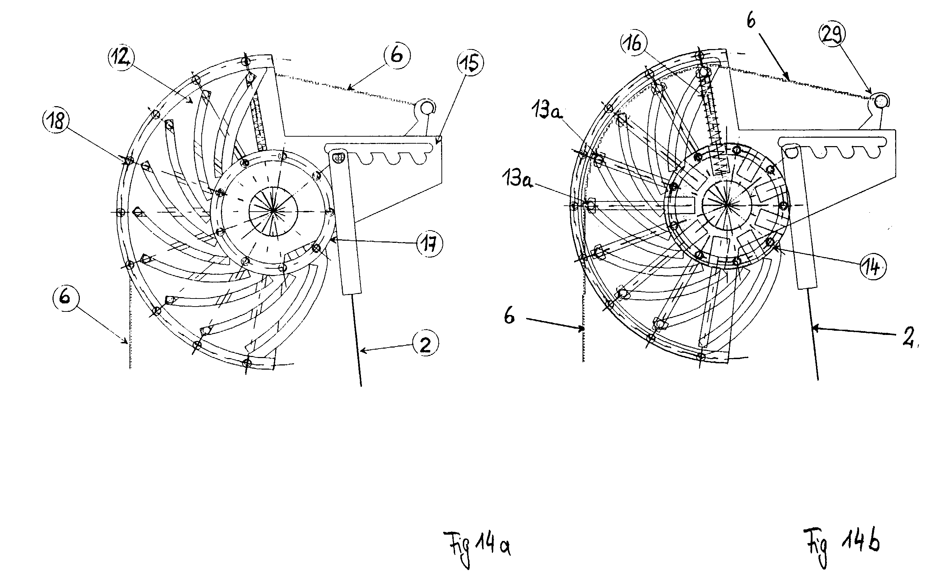

Die Figuren 12a, 12b zeigen eine erste Schaltstellung des Übergangsadapters, die automatisch in Abhängigkeit von dem Widerstand am Hinterrad eingenommen wird. Der Radzug 6 übt auf die Radzughalterung 29 einen entsprechenden Zug aus. Der Radzug 6, der gemäß Figur 8c über die Walzen 13a (ohne Druckfeder 16), 13b (mit Druckfeder 16) geführt ist, drückt diese in Abhängigkeit von der Anzahl und Stärke der Druckfedern 16 nach innen in Richtung auf die Unterlage 14. Eine solche zweite Schaltstellung ist in die Figuren 13a, 13b gezeigt. Wenn der Momentwiderstand wieder geringer wird, drücken die Druckfedern 16 die Walzen 13b und somit den Radzug 6 wieder nach außen.

Die erste Schaltstellung (Figur 12) wird somit bei minimalem Drehmoment und maximaler Geschwindigkeit eingenommen, die zweite Schaltstellung (Figur 13) bei maximalem Drehmoment und minimaler Geschwindigkeit. Zusätzlich zu dieser automatischen Einstellung ist noch eine manuelle Anpassung an die Bedürfnisse des Fahrers möglich, indem der Schalteinschnitt 26, der den Angriffspunkt des Kurbelzuges 2 an der Armseite 27 der Seitenplatte 15 darstellt, manuell verändert bzw. gewählt wird, um dadurch die Länge des Hebelarms zu verändern.

Die Walzen 13a, 13b sind einerseits zwischen den Seitenplatten 15 in den radial verlaufenden Walzeneinschnitten 25 und andererseits in den Synchroneinschnitten 19 der beiden Synchronplatten 12 geführt. Die Synchronplatten 12 schwenken durch Führung entlang der Innen- und Außenführungsschienen 17, 18, wenn sich die Walzen radial bewegen. Durch die Synchronplatten 12 wird dabei gewährleistet, daß alle Walzen stets die gleiche radiale Stellung aufweisen.

Wie sich aus den Figuren 12 und 13 ergibt, ist die Länge des Radzuges 6 zwischen der Radzughalterung 29 und der ersten Walze näherungsweise konstant, so daß sich bei der radialen Bewegung der Walzen keine Relativbewegung zwischen diesen und dem Radzug 6 und somit auch keine Reibung und kein Weglängenverlust der Kurbel 1 ergibt. Im Idealfall wird dies nur dann erreicht, wenn der Abstand zwischen der Radzughalterung 29 und der ersten Walze unendlich lang ist. In der Praxis wird man diesen Abstand so groß wie möglich halten und die Radzughalterung 29 so lang wählen, daß der Angriffspunkt des Radzuges 6 in der Mitte zwischen der höchsten und der tiefsten Position der Walzen liegt.

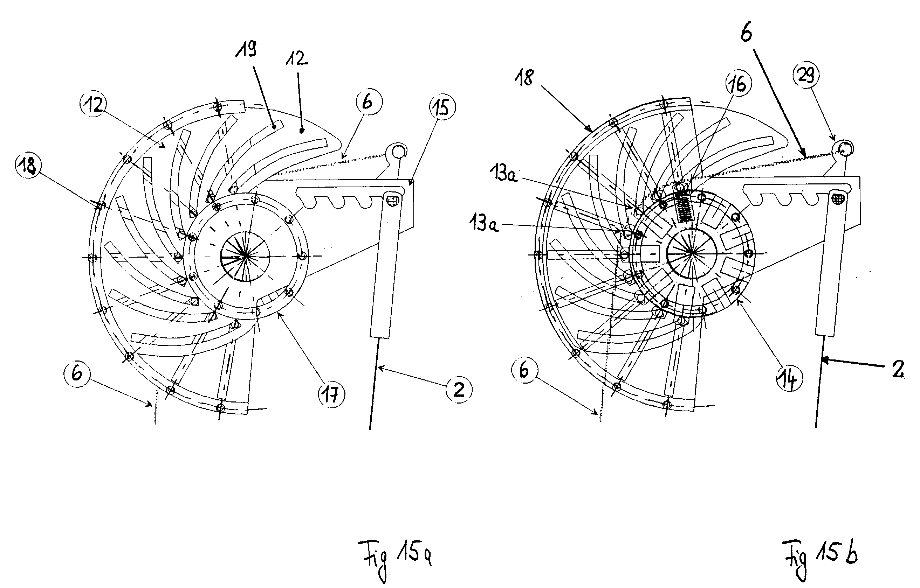

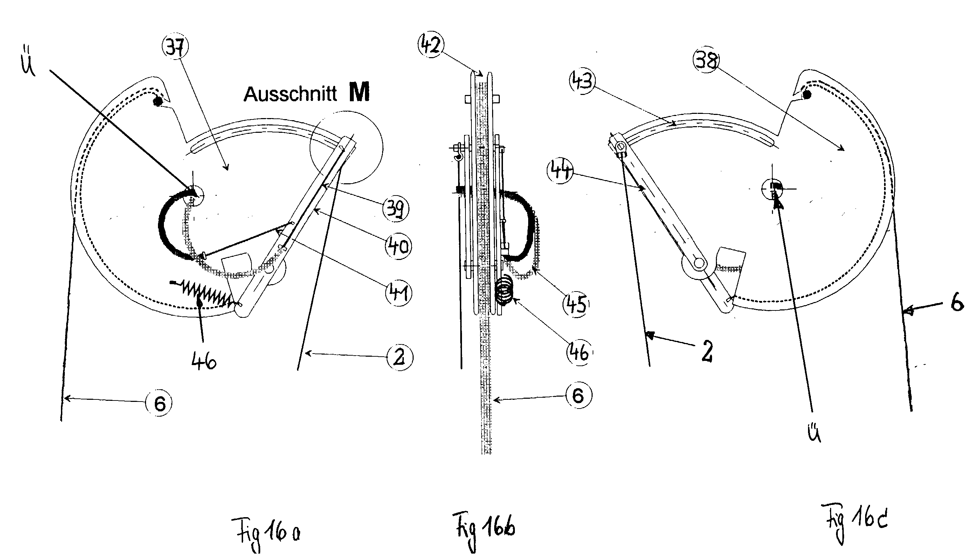

Die Figuren 14 und 15 zeigen eine zweite Ausführungsform des Übergangsadapters 3. Diese unterscheidet sich von der ersten Ausführungsform im wesentlichen darin, daß nur eine Zugwalze 13b mit Druckfeder 16 vorgesehen ist, während alle anderen Zugwalzen 13a nur durch die Schwenkbewegung der Synchronplatte 12 radial mitbewegt werden.

Die Figuren 14a und 14b zeigen eine der Figuren 12a und 12b entsprechende erste Schaltstellungen für minimales Drehmoment und maximale Fahrgeschwindigkeit, während die Figuren 15a und 15b eine zweite Schaltstellung für maximales Drehmoment und minimale Fahrgeschwindigkeit (entsprechend den Figuren 13a, 13b) darstellen. Im übrigen gelten auch hier die Erläuterungen, die oben im Zusammenhang mit den Figuren 12 und 13 gemacht wurden.

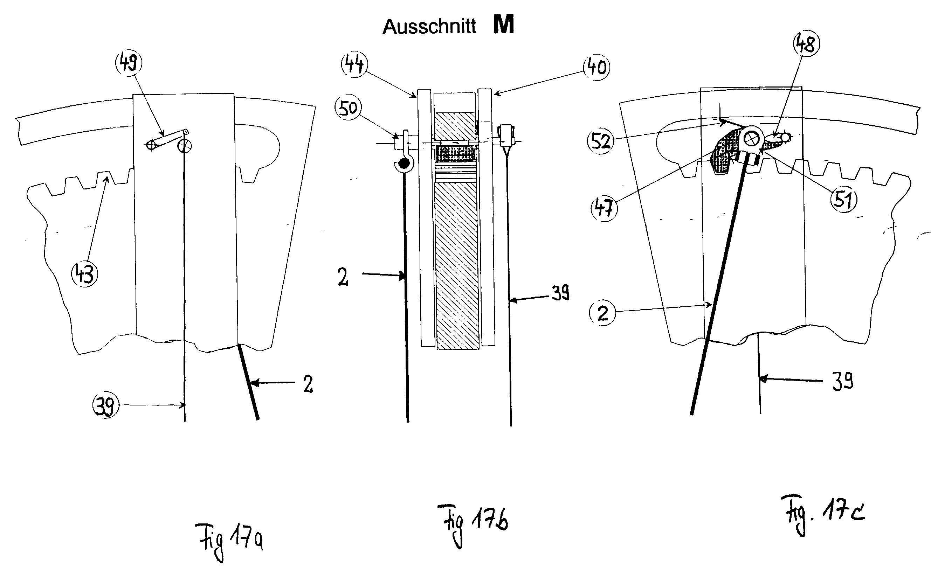

Die Figuren 16a, 16b, 16c zeigen in verschiedenen Ansichten eine dritte Ausführungsform des Übergangsadapters 3. Der wesentliche Unterschied zu der ersten und zweiten Ausführungsform besteht darin, daß gemäß Figur 16 eine manuelle Umschaltung der Übersetzung vorgesehen ist.

Figur 16a zeigt eine Draufsicht auf eine Schaltsektorseite 37 einer Basisplatte, während Figur 16c eine Draufsicht auf eine Radsektorseite 38 der Basisplatte darstellt. Zwischen beiden befindet sich gemäß Figur 16b ein Nutbogen 42, in dem der Radzug 6 läuft. Ferner sind in den Figuren 16a bis 16c der Kurbelzug 2, ein Schaltgriffzug 39, eine Langschaltstange 40, ein Schaltzug 41, eine Zughülle 45, eine Einrenkungszugfeder 46, eine Kurzschaltstange 44 sowie ein Zahnbogen 43 dargestellt.

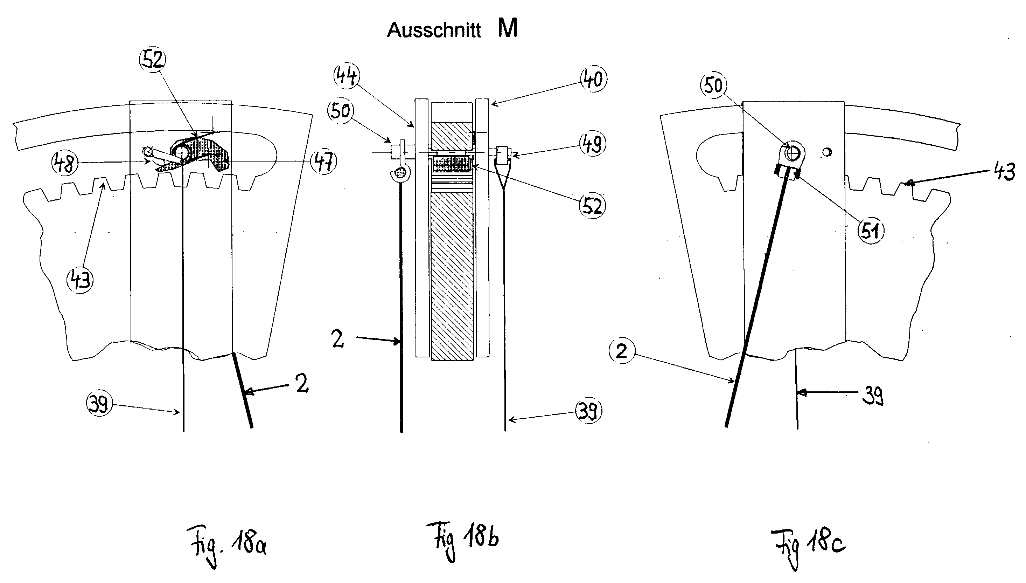

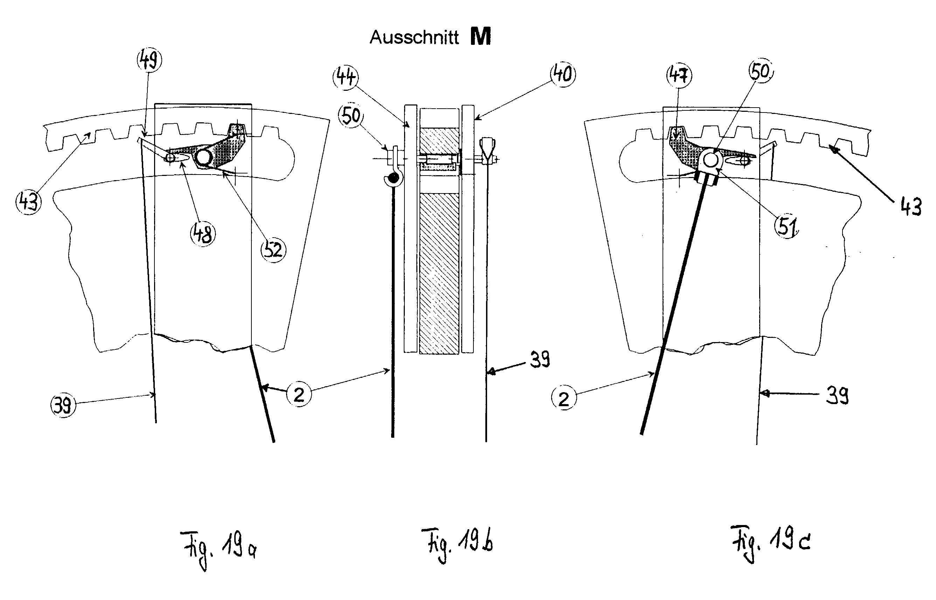

Die Figuren 17a 17b, 17c zeigen einen Detailausschnitt M in dem Zustand, in dem die Schaltkupplung geschlossen (eingerastet) ist, und zwar wiederum in verschiedenen (geklappten) Ansichten, während in den Figuren 18a, 18b, 18c der gleiche Ausschnitt gezeigt ist, bei dem jedoch die Schaltkupplung getrennt ist.

Die Schaltkupplung weist einen Schaltgriff 49 auf, der über den Schaltgriffzug 39 betätigt wird. Dadurch wird gemäß Figur 17c und Figur 18c eine Schaltkurbel 48 geschwenkt, die einen Sperrhahn 47 aus einer Einkerbung des Zahnbogens 43 heraushebt, und zwar gegen die Kraft einer Einrenkungsfeder 52. Eine Koppelachse 50, an der der Kurbelzug 2 mittels eines Kurbelzuganschlusses 51 befestigt ist, kann nun entlang des Zahnbogens 43 verschoben werden. Zu diesem Zweck dient der Schaltzug 41, mit dem die Langschaltstange 40 beziehungsweise die Kurzschaltstange 44 durch Ziehen geschwenkt werden kann. Die Einrenkungszugfeder 46 wirkt in der entgegengesetzten Richtung und führt die Stangen bzw. die Koppelachse 50, die die beiden Stangen 40, 44 verbindet, wieder zurück.

Nach dem Schaltvorgang und der Verschiebung der Koppelachse 50 entlang des Zahnbogens 43 wird die Schaltkupplung wieder geschlossen, indem der Schaltgriffzug 39 entspannt wird und die Einrenkungsfeder 52 den Sperrhahn 47 wieder zwischen zwei Zähne einrasten läßt.

Durch die erläuterte Verschiebung des Kraftangriffspunktes des Kurbelzuges 2 entlang des Zahnbogens 43 ändert sich der Abstand zu dem Drehpunkt Ü der Basisplatte (Übergangsadapter), so daß die gewünschte Drehmomentänderung erzielt wird. Figur 16 zeigt somit eine Schaltstellung, die für maximales Drehmoment und minimale Geschwindigkeit geeignet ist.

Die Figuren 19a, 19b, 19c zeigen schließlich verschiedene Ansichten (wie bei allen Ansichten geklappt) einer vierten Ausführungsform des Übergangsadapters in einer ersten Schaltstellung, der ebenfalls manuell betätigt wird.

Im Unterschied zur dritten Ausführungsform liegt hier der Zahnbogen 43 an der Oberseite einer Aussparung der Schaltsektorseite 37 der Basisplatte. Entsprechend drückt der Schaltgriff 49 die Schaltkurbel 48 beim Ziehen des Schaltgriffzuges 39 nach oben, so daß der Sperrhahn 47 gegen die Kraft der Einrenkungsfeder 52 aus dem Zahnzwischenraum herausgezogen wird. Die übrigen Teile und Funktionen sind wiederum die gleichen wie in den Figuren 16 bis 18.

Nachfolgend sollen die wesentlichen Vorteile der Erfindung zusammengefaßt werden:

Es stehen sehr viele hochfeste Züge und Seile zur Vefügung. Manche nichtmetallische Züge besitzen eine höhere Zugfestigkeit als Stahl und sind viel leichter als Stahl, wie z.B. Kohlenfasern, Graphitfäden und so weiter.

Züge sind zuverlässig, weil ein Zug mit vielen Fäden ein paralleles System ist; wenn ein Faden abgerissen ist, kann der Zug weiter funktionsfähig sein. Zur Führung reicht eine Nut aus. Es gibt keine Reibungsteile mehr. Der Wirkungsgrad ist deutlich höher und die Schmierungsprobleme entfallen, so daß das Rad deutlich sauberer wird.

Züge sind leicht zu bearbeiten. Mit einer Schere kann man leicht einen Zug schneiden. Der Anschluß eines Zugs ist, ebenso wie die Verbindung, sehr einfach. Im Notfall können mit einem Knoten die meistens Probleme beseitigt werden.

Bei der Reparatur oder bei der Wartung ist das erfindungsgemäße System sauberer und einfacher. Es gibt keine Kette und auch kein Kettenzahnrad mehr, die Risiko der Verschmutzung und Verletzung ist minimal. Mit Zügen kann man viel Schmierungsarbeit einsparen, so daß, ein wartungsfreies und sauberes Fahrrad ohne Aufwand realisierbar ist.

## Patentansprüche

1. Zugfahrwerk für ein Fahrrad mit mindestens einer schwenkbaren Kurbel (1) und einem Übergangsadapter (3) zum Übertragen einer Kurbel-Schwenkbewegung mittels eines Radzuges (6) auf ein Antriebsrad,
dadurch gekennzeichnet, daß der Übergangsadapter (3) Federelemente (16) aufweist, die von dem Radzug beaufschlagt sind und durch Zusammendrücken oder Ausdehnen ein auf das Antriebsrad übertragbares Drehmoment verändern.

2. Zugfahrwerk für ein Fahrrad mit mindestens einer schwenkbaren Kurbel (1) und einem Übergangsadapter (3) zum Übertragen einer Kurbel-Schwenkbewegung mittels eines Radzuges (6) auf ein Antriebsrad,
dadurch gekennzeichnet, daß der Übergangsadapter (3) eine Basisplatte (37, 38) aufweist, die von einem mit der Kurbel (1) verbundenen Kurbelzug (2) beaufschlagbar ist, dessen Anlenkungspunkt an dem Übergangsadapter in der Weise verschiebbar ist, daß der wirksame Abstand zu seinem Drehpunkt (Ü) einstellbar ist.
